(19) Europäisches Patentamt

European Patent Office

Office européen des brevets

(11) **EP 1 622 321 A1**

(12) **EUROPEAN PATENT APPLICATION**

(43) Date of publication:
01.02.2006 Bulletin 2006/05

(51) Int Cl.:
*H04L 12/56* (2006.01)

(21) Application number: 04018138.0

(22) Date of filing: 30.07.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **SIEMENS AKTIENGESELLSCHAFT**
**80333 München (DE)**

(72) Inventors:
• **Brandt, Andreas**
**12589 Berlin (DE)**
• **Brandt, Manfred**
**15537 Erfinder (DE)**
• **Rugel, Stefan**
**80639 München (DE)**
• **Weber, Dietmar**
**81375 München (DE)**

(54) **Admission control for packet switched real time services based on the current real time traffic**

(57) Deployment of realtime services will be important for the economic success of the 3GPP packet domain. Within this paper, a simple approach of admission control for realtime traffic is introduced, which takes its decisions on base of actual throughput. We present a fluid flow model, which allows to calculate the key performance indicators regarding packet loss, session request denial and plannable throughput. The formalism can be applied with good numerical accuracy and performance within the full range of traffic aggregation, which is characteristic for a mobile network. We apply the formalism to the traffic characteristics of Voice over IP and Push to Talk and show, that our approach is promising in particular for Push to Talk with its high percentage of silent periods.

EP 1 622 321 A1

**Description**

**1 Introduction**

From GPRS experience it comes more and more apparent that the offering of conversational and streaming services will be a crucial issue for the economic success of the 3GPP packet domain. New services will be deployed which may require realtime (RT) QoS, but differ from nowadays realtime applications as they are explicitly tailored to the prospects and limits of mobile networks. In particular, the bandwidth limitations of the radio access are decisive. On the one hand, this will drive technical development like data compression or the integration of WLAN hotspots into the 3GPP framework. On the other hand, this may favor such kind of services and applications, which do not use their full bandwidth all the time, like Push to Talk (PoC) which shows a considerably higher percentage of idle periods during the duration of a call than "classical" Voice over IP (VoIP) does. However, these characteristics can only be exploited if the admission control (AC) is made aware of the opportunity, that more sessions can be accepted than it seems to be possible when looking at the requested peak rates.

Our paper deals with this approach. Unlike previous investigations, which did a lot of detailed work on admission control for mobile networks, cf. [8] and the references herein, and also paid special attention to the 3GPP radio networks, cf. [12], we concentrate on the opportunity of overbooking. In order not to be limited by simulation time, we tried to develop a model which is simple enough to be tractable analytically, with a mathematical formalism being applicable to the wide range of traffic aggregation which is a main characteristic of mobile networks and extends from a few ten virtual sessions per cell up to some thousands of sessions which are handled in parallel by the components of the mobile core.

The paper is organized as follows: Section 2 gives an overview of our model from the technical point of view. Section 3 explains the mathematical framework, which is worth to take the main part of the document: even being more or less standard mathematics, the AC feedback mechanism itself and the large numbers of accepted sessions are highly non-trivial issues for numerical treatment. Section 4 then applies the formalism to the problem under consideration, and we end up with the conclusion given in Section 5.

**2 Model Overview**

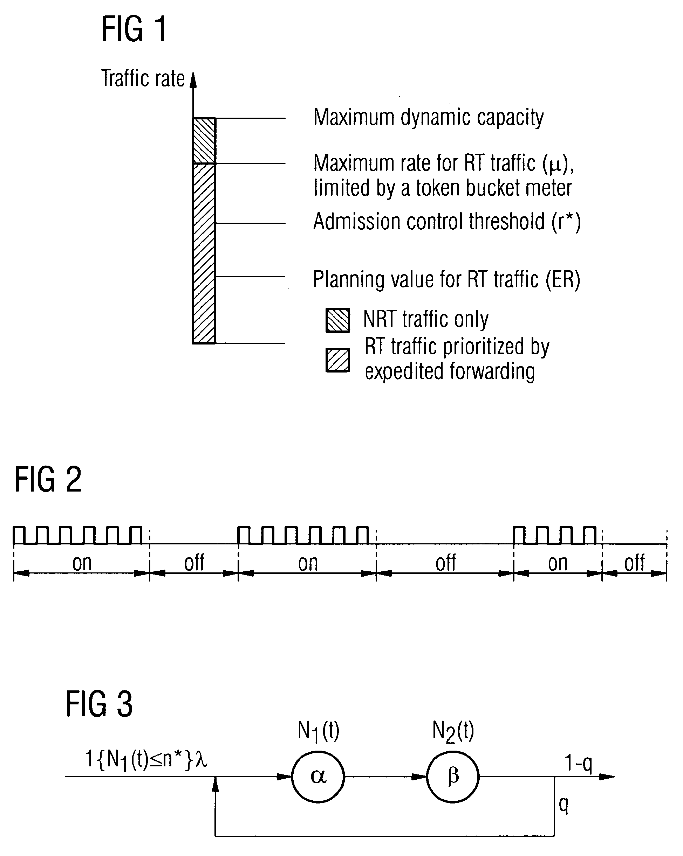

The model under consideration here acts within the framework of the 3GPP end-to-end service concept, cf. [1] and [2]. As depicted in Fig. 1, the RT traffic rate is limited (by a token bucket meter) to a level somewhere below the maximum dynamic capacity, in order to guarantee e.g. non-realtime (NRT) signaling traffic of high priority to be processed in time.

We assume the following token bucket algorithm for the RT traffic rate: At constant rate $\mu$ tokens arrive at a token bucket of capacity $b$. Arriving tokens which find the bucket full get lost. An arriving packet is paired with a token from the token bucket - if there is any - and then served by the system. An arriving packet which cannot be paired with a token is discarded, i.e. gets lost.

Quite below the maximum rate $\mu$ for RT traffic, cf. Fig. 1, we find its planning value *ER* which results from the success ratio for incoming session requests. In between, we see the proposed admission control threshold $r^*$ which is used to dynamically reject new incoming session requests if the current traffic rate is above $r^*$.

We consider incoming session requests - when accepted - as a session which consists of subsequent on-off cycles generating packets at constant traffic rate $r$ during each on period of any cycle, cf. Fig. 2. An incoming session request will be accepted if and only if the actual packet arrival rate, generated by the accepted session requests which are in an on period, i.e. active, is not larger than the above mentioned threshold $r^*$.

The interesting quantities for this system are: the probability $p_{\ell,r}$ that an incoming session request will not be accepted by the system, the mean rate *ER* of packets generated by session requests accepted by the system (planning value) and the packet loss probability $p_{\ell,p}$ due to an empty token bucket.

The engineering process, which is related to the technical approach described above, is built up in two steps:

1. $r^*$ has to be determined on base of requirements for the packet loss rate.
2. *ER* has to be determined considering the required success rate for the incoming session requests.

For comparison, a simple static approach for AC only allocates packet or bit rate if it is available and has not been requested so far. So the maximum number of accepted sessions for the static case is $\mu/r$. As with the dynamic approach, the mean number of accepted sessions and thus the mean traffic rate *ER'* results from the required success rate for the incoming session requests. The efficiency of the dynamic approach compared to static AC may be defined as $\omega := ER/ER'$. If $\omega > 1$, it pays for dynamic AC to exploit the fact that even realtime services tolerate packet loss below a given threshold. If $\omega < 1$, $r^*$ is too low for an acceptable *ER*, in this case the static approach should be favored. A detailed quantitative approach will be given within Section 3.

In general, the model calculations presented within the following section may be applied to both, bit and packet rate, as long as the fluid flow model is a good approximation. Within mobile networks, bandwidth and CPU capacity are dynamic resources to be protected by AC, the CPU capacity being mainly an issue for the core network due to the small size of the realtime packets.

### 3 Theoretical Calculation

For a mathematical treatment we assume that the incoming session requests, shortly called requests in the following, form a Poisson process of some intensity $\lambda$. Further, we assume that the on and off periods are exponentially distributed with mean $1/\alpha$ and $1/\beta$, respectively, and that the positive number of on-off cycles is geometrically distributed with parameter $q \in [0, 1)$.

Let $N_1(t)$ and $N_2(t)$ be the number of requests in the system at time $t + 0$ which are in an on and off period, respectively. The admission control strategy for the requests reads as follows: an arriving request at time $t$ is accepted if and only if $N_1(t - 0) \leq n^*$, where $n^* := \lfloor r^*/r \rfloor$. The process $(N_1(t), N_2(t))$, $t \in \mathbb{R}$, is a Markov process with state space $\mathbb{Z}_+^2$. The dynamics of $(N_1(t), N_2(t))$ correspond to the dynamics of an infinite capacity two-node network with state-dependent arrival rate at the first node, given in Fig. 3.

In the following we assume that $(N_1(t), N_2(t))$, $t \in \mathbb{R}$, is a stationary process. Having in mind real life applications where $EN_1(t) \approx EN_2(t) \approx 10^3$, the balance equations for the occupancy distribution in this network are too complex to be solved numerically. Therefore we are interested in approximations for the occupancy distribution $p(n) := P(N_1(t) = n)$ in Node 1 which can be computed much more efficiently.

### 3.1 Approximation by a binomial model

For the mean sojourn time $EV$ of an accepted request in the system it holds

$$EV = \frac{1}{\alpha(1-q)} + \frac{1}{\beta(1-q)} \, . \tag{1}$$

We approximate the sojourn time distribution by the exponential distribution with parameter $\gamma := 1/EV$, and we assume that any request in the two-node network is - when looking at an arbitrary time instant at the system - with probability

$$p := \beta/(\alpha+\beta) \tag{2}$$

in Node 1, i.e. active, and with probability $1 - p$ in Node 2.

Further, we approximate the dynamics of the total number $J(t)$ (= $N_1(t) + N_2(t)$) of requests in the network at time $t + 0$ by a stationary birth-death process $J^{(1)}(t)$ with death rates $j_\gamma$, $j \in \mathbb{Z}_+ \setminus \{0\}$, and birth rates

$$\lambda_j^{(1)} := \lambda \sum_{n=0}^{n^*} \binom{j}{n} p^n (1-p)^{j-n} \, , \quad j \in \mathbb{Z}_+ \, , \tag{3}$$

where we have in mind that a request is active with probability $p$ and that hence the sum on the r.h.s. of (3) is the probability that an arriving request from outside will be accepted. Its distribution $\pi^{(1)}(j) := P(J^{(1)}(t) = j)$ is given by

$$\pi^{(1)}(j) = \pi^{(1)}(0) \prod_{\ell=1}^{j} \frac{\lambda_{\ell-1}^{(1)}}{\ell\gamma} \, , \quad j \in \mathbb{Z}_+ \, , \tag{4}$$

where $\pi^{(1)}(0)$ is determined by the normalizing condition. As with probability $p$ a request in the network is active, for the stationary distribution of the number of active requests we find

$$p^{(1)}(n) = \sum_{\ell=n}^{\infty} \pi^{(1)}(\ell) \binom{\ell}{n} p^n (1-p)^{\ell-n}, \quad n \in \mathbb{Z}_+ . \qquad (5)$$

Note that in the limiting case $q \to 1$, where $\lambda$, $\alpha(1 - q)$, $\beta(1 - q)$, $n^*$ are fixed, it holds: the sojourn time of an accepted request is exponentially distributed with parameter $\gamma$, $J(t)$ is a birth-death process with rates $\lambda_j^{(1)}$, $j\gamma$ and $p^{(1)}(n)$ = $p(n)$, $n \in \mathbb{Z}_+$ cf. [7]. Hence the binomial model should provide a good approximation if the mean number of on periods generated by a request is sufficiently large.

[1]If $n$ requests are active then $n\alpha$ is the rate that an on period will end.

### 3.2 Approximation of the dynamics of the number of active requests by a birth-death process

For approximating the dynamics of $N_1(t)$ we define a stationary birth-death process $N_1^*(t)$ with birth rates $\lambda_n^*$, , which have to be determined, and death rates[1] $\mu_n := n\alpha$ such that its distribution $p^*(n) := P(N_1^*(t) = n)$, $n \in \mathbb{Z}_+$ , fits $p^{(1)}(n)$, $n \in \mathbb{Z}_+$ . It follows

$$\lambda_n^* = (n+1)\alpha \frac{p^{(1)}(n+1)}{p^{(1)}(n)}, \quad n \in \mathbb{Z}_+ , \qquad (6)$$

and after some algebra

$$\lambda_n^* = \frac{\lambda}{1-q} \frac{\sum_{\ell=0}^{\infty} \left( \prod_{j=0}^{\ell+n} \frac{\lambda_j^{(1)}}{\lambda} \right) \frac{1}{\ell!} \left( \frac{\lambda}{\beta(1-q)} \right)^{\ell}}{\sum_{\ell=0}^{\infty} \left( \prod_{j=0}^{\ell+n-1} \frac{\lambda_j^{(1)}}{\lambda} \right) \frac{1}{\ell!} \left( \frac{\lambda}{\beta(1-q)} \right)^{\ell}}, \quad n \in \mathbb{Z}_+ . \qquad (7)$$

Because of (3), (7), it holds $0 < \lambda_n^* \le \lambda/(1-q)$, $n \in \mathbb{Z}_+$ .

### 3.3 Modification of the birth-death process

Note that the birth-death process $N_1^*(t)$ only depends on the parameters $\lambda/(1-q)$, $\alpha$, $\beta$ and $n^*$ while the Markov-modulated process $N_1(t)$ additionally depends on $q$. Thus modifying the birth rates $\lambda_n^*$ of $\hat{N}_1^*(t)$ by an additional parameter could improve the approximation. In the limiting cases $\beta \to 0$ and $\beta \to \infty$ the distribution of $N_1(t)$ corresponds to the distribution of the number of requests in an infinite server system with two arrival streams, where the first arrival stream in both cases is a state-dependent arrival process of intensity $\mathbb{1}\{n \le n^*\}\lambda$ and the second process is a Poisson process of intensity $\lambda(1 - p_{\ell,n})q/(1 - q)$ and a state-dependent arrival process of intensity $\mathbb{1}\{n \le n^*\}\lambda q/(1 - q)$, respectively. Moreover, $N_1(t)$ is a birth-death process with birth rates $\mathbb{1}\{n \le n^*\}\lambda$ and death rates $n\alpha$ in case of $q = 0$. These observations suggest to replace the birth rates $\lambda_n^*$ of $N_1^*(t)$ with

$$\lambda_n := \mathbb{1}\{n \le n^*\}\lambda + c\lambda_n^*, \quad n \in \mathbb{Z}_+ , \qquad (8)$$

where $c \in \mathbb{R}_+$ is a parameter which has to be determined. Let $X(t)$ be the corresponding stationary birth-death process with birth rates (8) and death rates $\mu_n = n\alpha$, and let us denote by $p^{(a)}(n) := P(X(t) = n)$, $n \in \mathbb{Z}_+$ its distribution.

Since also for an approximation of $N_1(t)$ the rate of accepted requests should be equal to the rate of requests leaving the system, we claim for $X(t)$ the conservation law

$$\lambda \sum_{n=0}^{n^*} p^{(a)}(n) = \alpha(1-q) \sum_{n=1}^{\infty} n p^{(a)}(n), \tag{9}$$

which determines the parameter $c \in \mathbb{R}_+$ in (8) uniquely.

**Lemma 3.1** *Let* $\lambda$, $\alpha$, $\beta > 0$, $q \in [0, 1)$ *and* $n^* \in \mathbb{Z}_+$ *be given. Then* (9) *has a uniquely determined solution* $c \in \mathbb{R}_+$

**Proof**. It follows easily that (9) is equivalent to

$$f(c) := \frac{\lambda}{1-q} \sum_{n=0}^{n^*} \frac{1}{n!\,\alpha^n} \prod_{j=0}^{n-1} (\lambda + c\lambda_j^*)$$

$$= \sum_{n=0}^{\infty} \frac{1}{n!\,\alpha^n} \prod_{j=0}^{n} (\mathbb{1}\{j \le n^*\}\lambda + c\lambda_j^*) =: g(c). \tag{10}$$

As $f(0) \ge g(0)$ and $f(c) \le g(c)$ for sufficiently large $c$, there exists a solution of (9). In the following it will be shown that $g(c)/f(c)$ is strictly monotonically increasing for $c \in \mathbb{R}_+$, which provides the uniqueness. It holds

$$\frac{\lambda}{1-q}\frac{g(c)}{f(c)} - \alpha h(c) = \frac{\sum_{n=n^*}^{\infty} \frac{1}{n!\,\alpha^n} \prod_{j=n^*+1}^{n} (c\lambda_j^*)}{\sum_{n=0}^{n^*} \frac{1}{n!\,\alpha^n} \prod_{j=n}^{n^*} (\lambda + c\lambda_j^*)^{-1}}, \tag{11}$$

where

$$h(c) := \frac{\sum_{n=0}^{n^*} \frac{n}{n!\,\alpha^n} \prod_{j=0}^{n-1} (\lambda + c\lambda_j^*)}{\sum_{n=0}^{n^*} \frac{1}{n!\,\alpha^n} \prod_{j=0}^{n-1} (\lambda + c\lambda_j^*)}, \quad c \in \mathbb{R}_+.$$

As the r.h.s. of (11) obviously is strictly monotonically increasing in $c \in \mathbb{R}_+$, it is sufficient to prove that $h'(c)$ is nonnegative. Using the abbreviation $\xi_j := \lambda + c\lambda_j^*$,, after some algebra it follows

$$h'(c) = \Big( \sum_{0 \le m < n \le n^*} \frac{n-m}{n!\,\alpha^n\,m!\,\alpha^m} \Big( \prod_{j=0}^{n-1} \xi_j \Big) \Big( \prod_{j=0}^{m-1} \xi_j \Big) \Big( \sum_{j=m}^{n-1} \frac{\lambda_j^*}{\xi_j} \Big) \Big)$$

$$\Big( \sum_{n=0}^{n^*} \frac{1}{n!\,\alpha^n} \prod_{j=0}^{n-1} \xi_j \Big)^{-2} \ge 0.$$

$\square$

As $p^{(\alpha)}(n)$ should be an approximation of $p(n)$, we approximate $p_{\ell,r} = P(N_1(t) \ge n^* + 1)$ and $ER = rEN_1(t)$ by $p_{\ell,r}^{(a)} := P(X(t) \ge n^* + 1)$ and $ER^{(\alpha)} := rEX(t)$, respectively. Note that the conservation law (9) yields

$$ER^{(a)} = \frac{r\lambda(1-p^{(a)}_{\ell,r})}{\alpha(1-q)}\,. \tag{12}$$

The following theorem - the proof, cf. [7], is too long to be given here - tells us that in several limiting cases the proposed approximation $p^{(\alpha)}(n)$, $n \in \mathbb{Z}_+$, of $p(n)$, $n \in \mathbb{Z}_+$, is exact. This gives some evidence that $p^{(\alpha)}(n)$, $n \in \mathbb{Z}_+$, $p^{(a)}_{\ell,r}$ and $ER^{(\alpha)}$ will provide good approximations for $p(n)$, $n \in \mathbb{Z}_+$, $p_{\ell,r}$ and $ER$, respectively, in the general case.

**Theorem 3.1** *In the limiting cases*

   *(i) $q \to 1$, where $\lambda$, $\alpha(1 - q)$, $\beta(1 - q)$, $n^*$ are fixed,*
   *(ii) $q \to 0$, (iii) $\beta \to 0$, (iv) $\beta \to \infty$, (v) $n^* \to \infty$, where the remaining parameters are fixed, respectively,*

*it holds*

$$p(n) = p^{(a)}(n)\,, \quad n \in \mathbb{Z}_+\,,$$
$$p_{\ell,r} = p^{(a)}_{\ell,r}\,, \quad ER = ER^{(a)}\,. \tag{13}$$

### 3.4 Approximation of the packet loss probability

According to the fluid flow approximation, arriving packets during an on period are approximated by a fluid with rate $r$ and arriving tokens are approximated by a fluid with rate $\mu$, i.e., the discrete nature of the packets and tokens is ignored.

The Markov process $(X(t), B(t))$, $t \in \mathbb{R}$, where $B(t)$ denotes the token bucket content at time $t + 0$, is a birth-death fluid queue. Birth-death fluid queues with infinite buffer capacity are studied and surveyed in [9] Section 5. Having $\varepsilon$ in mind the complexity of the birth rates $\lambda_n$, $n \in \mathbb{Z}_+$, for $X(t)$ and $EX(t) \approx EN_1(t) \approx 10^3$, already determining the zeros of the characteristic polynomial for the corresponding system of ordinary differential equations would lead to serious problems. In view of these difficulties, we are interested in approximations for the packet loss probability $p_{\ell,p}$.

Let $\tau := \mu/r$ ($> 0$) be fixed and consider the stationary birth-death process $X(t)$, $t \in \mathbb{R}$, with birth rates $\lambda_n$ and death rates $\mu_n$ approximating $N_1(t)$. For fixed $i \in \{\lceil \tau \rceil, \lceil \tau \rceil + 1, \ldots\}$ let $X_i(t)$, $t \in \mathbb{R}$, be the birth-death process with distribution $P(X(t) \in (\cdot) \mid X(0-0) = i\text{-}1, X(0) = i)$, i.e., $Xi(t)$, $t \in \mathbb{R}$, has the Palm distribution of $P(X(t) \in (\cdot))$ with respect to the jump epochs from $i$ - 1 to $i$. Further, let $T_i$ the first epoch after $t = 0$ where $X_i(t)$ jumps from $\lceil \tau \rceil - 1$ to $\lceil \tau \rceil$. The integrals

$$A_i := \int_0^{T_i} r(X_i(t) - \tau)_+ \, \mathrm{d}t\,, \quad i \geq \lceil \tau \rceil, \tag{14}$$

correspond to the random amount of arriving fluid during $[0, T_i)$ which has to be paired from the token buffer. Let $A_{\lceil \tau \rceil - 1} := 0$ and $A := A_{\lceil \tau \rceil}$ for notational convenience.

The intensity $\eta$ of jumps of $X(t)$ from $\lceil \tau \rceil - 1$ to $\lceil \tau \rceil$ is given by

$$\eta = \lambda_{\lceil \tau \rceil - 1} p^{(a)}(\lceil \tau \rceil - 1) = \lceil \tau \rceil \alpha p^{(a)}(\lceil \tau \rceil)\,. \tag{15}$$

Using the cycle formula for regenerative processes with respect to $r(X_{\lceil \tau \rceil}(t) - \tau)_+$, we obtain that

$$EA = ET_{\lceil\tau\rceil}\, E[r(X(t)-\tau)_+],\tag{16}$$

where in view of (15) for the mean cycle length it holds

$$ET_{\lceil\tau\rceil} = \frac{1}{\eta} = \frac{1}{\lceil\tau\rceil\alpha p^{(a)}(\lceil\tau\rceil)}\,.\tag{17}$$

Consider the model with respect to the jump epochs from $\lceil\tau\rceil - 1$ to $\lceil\tau\rceil$, i.e. $X_{\lceil\tau\rceil}(0-0) = \lceil\tau\rceil - 1$, $X_{\lceil\tau\rceil}(0) = \lceil\tau\rceil$, and let $B$ the random token bucket content at time $t = 0$. Then $E[(A - B)_+]$ is the mean amount of packet fluid during $[0, T_{\lceil\tau\rceil})$ which gets lost. The mean total fluid $EF$ of arriving packets during $[0, T_{\lceil\tau\rceil})$ is given by the cycle formula:

$$EF = ET_{\lceil\tau\rceil}\, E[rX(t)]\,.\tag{18}$$

The fraction $E[(A - B)_+]/EF$ is the packet loss probability within the birth-death process approximation of the fluid flow model. Assuming that at the beginning of the cycle at time $t = 0$ the token bucket is full, we obtain the approximation

$$p^{(a)}_{\ell,p} := \frac{E[(A-b)_+]}{EF} = \frac{EA}{EF} - \frac{E[\min(A,b)]}{EF}\tag{19}$$

for the packet loss probability $p_{\ell,p}$.

By the Stone-Weierstrass theorem the function $\min(x,1)$, $x \in \mathbb{R}_+$, can be uniformly approximated by an exponential polynomial

$$\varphi(e^{-x}) = c_0 + c_1 e^{-x} + \ldots + c_m e^{-mx}$$

with arbitrary accuracy. Choosing $x = A/b$ provides the approximation

$$\min(A/b, 1) \approx \sum_{k=0}^{m} c_k\, e^{-kA/b}\,.$$

In view of $E[e^{-kA/b}] = A^*(k/b)$, multiplying by b and taking expectation yields

$$E[\min(A, b)] \approx b\sum_{k=0}^{m} c_k A^*(k/b)\,.\tag{20}$$

Specifically, we have chosen

$$\varphi(y) := 1 - y^n \sum_{j=n}^{\infty} \binom{j-1}{n-1}\left(1 - \sum_{i=n}^{j-1}\frac{1}{i}\right)_+ (1-y)^{j-n}\tag{21}$$

for $n = 8$, which is a polynomial of degree $m = 20$. Note that $\varphi(e^{-x})$ converges uniformly on $\mathbb{R}_+$ to $\min(x,1)$ for $n \to \infty$, cf. [7].

**3.5 Representation of $A^*(s)$ as continued fraction**

Applying the law of total probability with respect to the first jump epoch of $X_j(t)$ after $t = 0$ and the properties of birth-death processes provide the following renewal type equation for the LST $A_i^*(s) = E[e^{-sA_i}]$:

$$(\lambda_i + \mu_i + (i-\tau)rs)A_i^*(s) = \lambda_i A_{i+1}^*(s) + \mu_i A_{i-1}^*(s),$$
$$s \in \mathbb{R}_+, \quad i \geq \lceil \tau \rceil. \tag{22}$$

Moreover, $A_{\lceil \tau \rceil - 1} = 0$ yields

$$A_{\lceil \tau \rceil - 1}^*(s) = 1, \quad s \in \mathbb{R}_+. \tag{23}$$

In the following let $\tau \in \mathbb{R}_+ \setminus \{0\}$, $s \in \mathbb{R}_+$ be fixed and

$$x_i := A_i^*(s)/A_{i-1}^*(s), \quad i \geq \lceil \tau \rceil, \tag{24}$$

where because of (23) we have

$$x_{\lceil \tau \rceil} = A^*(s). \tag{25}$$

Since $A_i$, $i \geq \lceil \tau \rceil - 1$, is a stochastically monotonically increasing sequence of r.v.'s, $A_i^*(s) = E[e^{-sA_i}]$ is a decreasing sequence, and hence it holds $x_i \in (0,1]$, $i \geq \lceil \tau \rceil$. Replacing in (22) $A_{i+1}^*(s)$ and $A_{i-1}^*(s)$ with $A_i^*(s)x_{i+1}$ and $A_i^*(s)/x_i$, respectively, cf. (24), we obtain

$$x_i = \frac{\mu_i}{\mu_i + (i-\tau)rs + \lambda_i(1-x_{i+1})}, \quad i \geq \lceil \tau \rceil. \tag{26}$$

Thus the sequence $(x_i)_{i \geq \lceil \tau \rceil}$ satisfies a continued fraction equation, and $A^*(s)$ is represented as a continued fraction because of (25). Since the r.h.s. of (26) defines a Lipschitz function of $x_{i+1} \in (0,1]$ into (0,1] with Lipschitz constant $\lambda_i/\mu_i$ and as $\lim_{i \to \infty} \lambda_i/\mu_i = 0$, it follows that for any sufficiently large integer $n$ ($> \lceil \tau \rceil$), any $x_n \in (0, 1]$ and any $s \in \mathbb{R}_+$ the iteration (26) defines a value $x_{\lceil \tau \rceil}$ which approximates $A^*(s)$ with arbitrary accuracy. Hence (16)-(21), (25), (26) provide an efficient algorithm for computing $p_{\ell,p}^{(a)}$..

The above algorithms for computing the performance measures $p_{\ell,r}^{(a)}$,, ER and $p_{\ell,p}^{(a)}$ are implemented in a C-program. The computation is numerically stable over a rather wide range of parameters, and for a set of parameters as used in the next section the computation takes only a few seconds on a 1 GHz P4 processor.
Simulation of the fluid flow model has shown that the performance measures $p_{\ell,r}$, ER and $p_{\ell,p}$ are well approximated for real life parameters, as expected in view of Theorem 3.1. For comparing performance measures of packet models obtained by simulation and solution of fluid flow models cf. [10].

## 4 Results

The theoretical model sketched above will now be applied to two different kinds of realtime traffic models, the classical Voice over IP (VoIP) and Push to Talk (PoC) as a currently emerging application, cf. [3]. Table 1 shows their traffic parameters in so far as they are decisive for our investigations. The main difference among both models is the throughput utilization, which is defined here as the ratio of mean throughput and peak throughput of a single session. Even if PoC traffic statistics are not so well confirmed by practical experience as those for VoIP (for VoIP traffic parameters cf. e.g. [14]), there is some confidence that PoC, which is roughly speaking a way to use the mobile phone as a walky-talky, has longer silence periods due to its non-duplex mode of operation and due to blocking signaling periods during the communication phase.

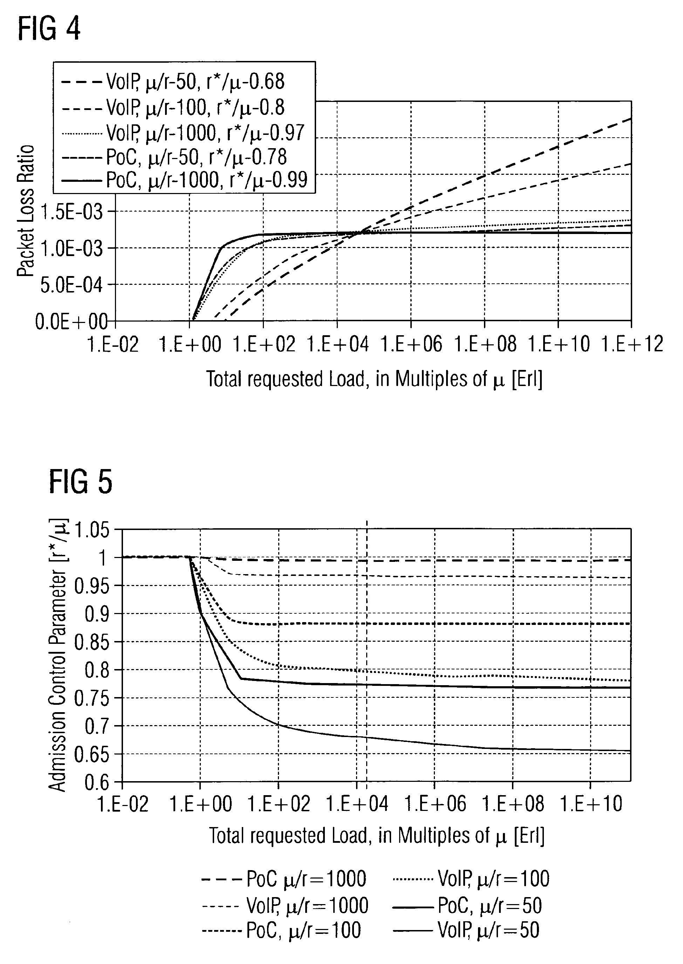

With the traffic examples from above we now illustrate the engineering method which is sketched in Section 2: first the proper admission control threshold $r^*$ has to be found and second the planning value $ER$ for the aggregated mean throughput has to be determined. This is done for given QoS requirements, i.e. the required values of the packet loss ratio, $p_{\ell,p}$, and $p_{\ell,r}$ the probability, that an incoming session request will not be accepted. For $p_{\ell,r}$ we choose a maximum value of $10^{-2}$. In order to find a proper condition for $p_{\ell,p}$, we consider the asymptotic behavior of the packet loss rate with increasing rates of total requested load, as shown within Fig. 4. The requested load is given in multiples of $\mu$ and calculates to $\lambda r/(\mu\alpha(1-q))$. If not stated otherwise, calculations are done with the bucket size $b$ set to zero in the fluid flow approximation $p_{\ell,p}^{(a)}$ of $p_{\ell,p}$ defined by (19).

The figure shows the efficiency of the dynamic approach of admission control: even at very high rates of incoming session requests - within Fig. 4 they extend up to values which would generate the $10^{12}$-fold traffic with regard to the maximum rate $\mu$ - the packet loss $p_{\ell,p}$ does not increase considerably. For the sake of robustness of our dimensioning approach, we set $r^*$ to values that limit $p_{\ell,p}$ to $10^{-3}$ and $10^{-4}$ at total requested traffic rates of the $10^4$-fold of $\mu$. Thus we expect the realtime traffic quality to be still acceptable even under extreme conditions. Please note, that for the rate of incoming session requests being within the planning region, $p_{\ell,p}$ will be well below $10^{-6}$.

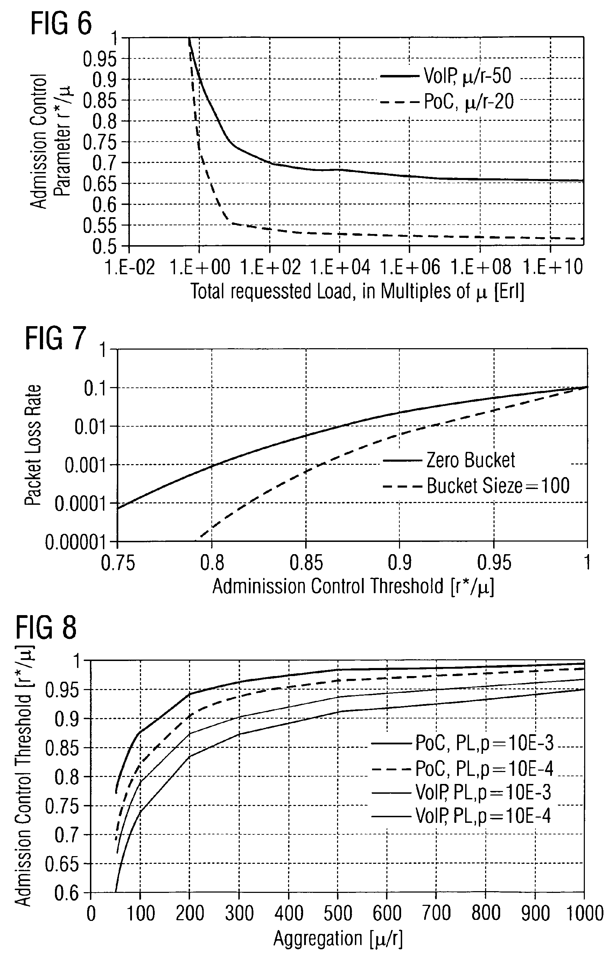

As shown in Fig. 5, $r^*$ keeps nearly constant for very high values of the requested total traffic. The level of $r^*/\mu$ depends on traffic aggregation as expected, and differs considerably among both of the traffic models. This may be due to the differences regarding throughput utilization shown in Table 1.

We therefore compare $r^*/\mu$ for both traffic models at the same level of $\tau/p$, i.e. the aggregation divided by the throughput utilization given in Table 1. The result depicted in Fig. 6 shows, that even now there is a big difference between VoIP and PoC, but in opposite to the results shown in Fig. 5, with VoIP higher values of $r^*/\mu$ are obtained than with PoC. Therefore we conclude at this point, that the admission control threshold $r^*/\mu$ depends in a more complex way on the parameters given in Table 1, but leave a detailed evaluation for further studies.

The effect of the bucket size $b$, as estimated within Section 3.4, is depicted in Fig. 7 and shows a considerable reserve regarding packet loss.

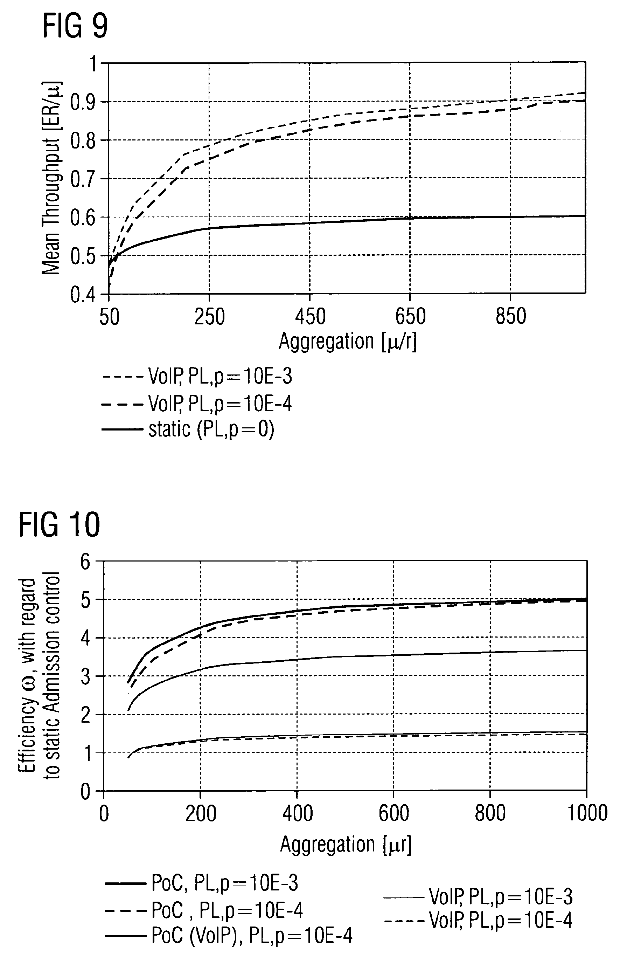

The results for the admission control threshold are summed up within Fig. 8. As expected, PoC achieves higher values for $r^*/\mu$ than VoIP, because a PoC session transfers less data than VoIP, both within a certain time and in total.

We now consider the achieved mean rates ER and compare them to $ER'$, cf. Section 2. $ER'$ is the accumulated mean rate related to the "static" approach, which only admits $\mu/r$ simultaneous sessions in maximum. $ER'$ can be obtained from the total number of sessions $\mu/r$ and the requested session loss rate of $10^{-2}$ by the Erlang formula. The comparison is shown in Fig. 9 in the light of the example of VoIP. VoIP dynamic admission control pays at aggregation levels above 70. That is, if the dynamic resource under consideration is able to process the peak rates of 70 sessions in parallel, dynamic admission control performs better than the static approach. With increasing level of aggregation, $ER$ tends to its maximum value which is given by the token rate $\mu$, whereas the static approach is limited to $p\mu$, i.e. $\mu$ multiplied with the throughput utilization of $p = 0.625$ as given in Table 1. Please note, that the packet loss rates listed in Fig. 9 only occur in very extreme cases, cf. Fig. 4. Under the conditions of planning load, packet loss is well below $10^{-6}$ in both cases. Fig. 8 compares the efficiency of the dynamic admission control for VoIP and PoC. Clearly, PoC is well above VoIP, as it is suggested by the theoretical maximum efficiency, which is shown within Table 1 as the reciprocal value of throughput utilization. Further it is evident, that VoIP traffic is not expected to be ruled efficiently by dynamic admission control. The dynamic approach however appears to be promising for services like PoC which show a low throughput utilization.

Our results are summed up within Fig. 10. In contrast to VoIP, PoC shows an advantage of dynamic AC with regard to the static approach over the full range of aggregation which has been investigated. According to the throughput utilization of PoC, which is given within Table 1, a static admission control can only use 25% of the given total throughput capacity $\mu$. This is the main reason for the large enhancement in efficiency, which is obtained for PoC with dynamic admission control. As can be seen, the dynamic approach even pays considerably, if the admission control threshold $r^*$ is set to a lower level by a conservative approach, which in order to be at the save side takes the worst case value (VoIP) of both kinds of traffic.

## 5 Conclusion

We have investigated a realization of the dynamic admission control for realtime traffic, which takes its decisions on base of the actual traffic rate. The details of the entire mechanism have been modeled analytically by a fluid flow model. The formalism, which calculates the probability for packet loss and admission denial for given traffic characteristics, provides good accuracy, even for aggregation levels of $10^4$, and can therefore be applied to the entire mobile network from the radio access to the core. The findings of a first application to the traffic models of "VoIP" and "PoC" show the advantage of a dynamic admission control, which acts on actual throughput. It will pay, if idle periods take major parts of total RT session times. Even if setting the admission control threshold cautiously, the poor efficiency of static admission control will be enhanced considerably. Future studies have to be done on the detailed dependency of admission control performance on traffic model parameters, as well as the treatment of different packet or bit rates within the aggregated traffic stream.

References

[1] "Quality of service concept and architecture," *3GPP TS* 23.107.

[2] "End-to-end quality of service (QoS) concept and architecture," *3GPP TS* 23.207.

[3] "Technical specification; push-to-talk over cellular (PoC)," *PoC Release 2.0; Architecture V2.0.8 (2004-06)*.

[4] I.J.B.F. Adan, E.A. van Doorn, J.A.C. Resing, and W.R.W. Scheinhardt, " Analysis of a single-server queue interacting with a fluid reservoir," *Queueing Syst.,* vol.29, pp. 313-336, 1998.

[5] N. Akar and K. Sohraby, "Algorithmic solution of finite Markov fluid queues," in *Providing Quality of Service in Heterogeneous Environments, Proceedings of the 18th Int. Teletraffic Congress, Berlin, Germany, 2003,* J. Charzinski, R. Lehnert and P. Tran-Gia, Eds. Amsterdam: Elsevier Science, 2003, pp. 621-630.

[6] A. Brandt and M. Brandt, "On the distribution of the number of packets in the fluid flow approximation of packet arrival streams," *Queueing Syst.,* vol. 17, pp. 275-315, 1994.

[7] A. Brandt and M. Brandt. (2004, July) A birth-death approximation for a fluid source in a token bucket model. [Online]. Available: http://www.wiwi.hu-berlin.de/or/forschung/preprints.html

[8] S.K. Das, R. Jayaram, N.K. Kakani, and S.K. Sen, "A call admission and control scheme for quality-of-service (QoS) provisioning in next generation wireless networks," *Wireless Networks,* vol. 6, pp.17-30, 2000.

[9] E.A. van Doorn and W.R.W. Scheinhardt, "Analysis of birth-death fluid queues," in *Proceedings of Applied Mathematics Workshop, Korea Advanced Institute of Science and Technology, Taejon, 1996,* B.D. Choi, Ed. pp. 13-29, 1996.

[10] A.I. Elwalid and D. Mitra, "Analysis and design of rate-based congestion control of high speed networks, I: Stochastic fluid models, access regulation," *Queueing Syst.,* vol. 9, pp. 29-63, 1991.

[11] R.B. Lenin and P.R. Parthasarathy, "A computational approach for fluid queues driven by truncated birth-death processes," *Methodol. Comput. Appl. Probab.,* vol. 2, pp. 373-392, 2000.

[12] C. Lindemann, M. Lohmann, and A. Thümmler, "A unified approach for improving QoS and provider revenue in 3G mobile networks," *Mobile Networks and Applications,* vol. 8, pp. 209-221, 2003.

[13] P.R. Parthasarathy, K.V. Vijayashree, and R.B. Lenin, "An M/M/1 driven fluid queue - continued fraction approach," *Queueing Syst.,* vol. 42, pp.189-199,2002.

[14] D.D. Trang, B. Sonkoly, and S. Molnár, "Fractal analysis and modelling of VoIP traffic," in *Proc. 11th International Telecommunications Network Strategy and Planning Symposium, July 2004.*

Claims

1.  Method for admission control for real time services via packet oriented data transmission,
    wherein the cumulated rate of the current real time data traffic is determined and
    wherein, after a request for admission of a new connection,
    the new connection is declined if the cumulated current rate of the current data traffic on the connections is greater than an admission control threshold (r*)
whereas the new connection is accepted if the cumulated current rate of the current data traffic on the connections is below an admission control threshold (r*).

2. Method according to claim 1, **characterized in that** the admission control threshold (r*) is predetermined.

3. Method according to any of the preceding claims, **characterized in that**
the admission control threshold (r*) is calculated taking into account a predetermined maximum packet loss probability (19).

4. Method according to any of the preceding claims, **characterized in that** the telecommunication network is or comprises a packet switched mobile telecommunication network.

5. Method according to any of the preceding claims, **characterized in that** the telecommunication network is or comprises a packet switched GPRS network domain.

6. Method according to any of the preceding claims, **characterized in that** the telecommunication network is or comprises a packet switched UMTS network domain.

7. Method according to any of the preceding claims, **characterized in that** the plurality of connections are real time connections.

8. Method according to any of the preceding claims, **characterized in that** the real time connections comprise ON-phases and OFF- phases, wherein during ON phases packets are transferred with a maximum rate (r), whereas during OFF phases no packets are transferred.

9. Method according to any of the preceding claims, **characterized in that** the cumulated current rate of the current data traffic on the connections comprises the rate requested for the new connection.

10. Method according to any of the preceding claims, **characterized in that** the cumulated current rate of the current data traffic on the connections comprises the cumulated rates of the already existing connections.

11. Method according to any of the preceding claims, **characterized in that** the determined current rates are current maximum rates.

## FIG 1

Traffic rate

Maximum dynamic capacity

Maximum rate for RT traffic ($\mu$), limited by a token bucket meter

Admission control threshold ($r^*$)

Planning value for RT traffic (ER)

NRT traffic only

RT traffic prioritized by expedited forwarding

## FIG 2

on | off | on | off | on | off

## FIG 3

$1\{N_1(t) \leq n^*\}\lambda$  $N_1(t)$ $\alpha$  $N_2(t)$ $\beta$  $1-q$

$q$

12

## FIG 4

Legend:
- – – – VoIP, μ/r-50, r*/μ-0.68
- – – – – VoIP, μ/r-100, r*/μ-0.8
- ·········· VoIP, μ/r-1000, r*/μ-0.97
- – – – – – PoC, μ/r-50, r*/μ-0.78
- ———— PoC, μ/r-1000, r*/μ-0.99

Packet Loss Ratio

1.5E-03
1.0E-03
5.0E-04
0.0E+00

1.E-02   1.E+00   1.E+02   1.E+04   1.E+06   1.E+08   1.E+10   1.E+12

Total requested Load, in Multiples of μ [Erl]

## FIG 5

Admission Control Parameter [r*/μ]

1.05
1
0.95
0.9
0.85
0.8
0.75
0.7
0.65
0.6

1.E-02   1.E+00   1.E+02   1.E+04   1.E+06   1.E+08   1.E+10

Total requested Load, in Multiples of μ [Erl]

Legend:
- – – – PoC μ/r=1000
- ········· VoIP, μ/r=100
- – – – – VoIP, μ/r=1000
- ———— PoC, μ/r=50
- ------- PoC, μ/r=100
- ———— VoIP, μ/r=50

## FIG 6

## FIG 7

## FIG 8

## FIG 9

---- VoIP, PL,p=10E-3

--- VoIP, PL,p=10E-4

—— static (PL,p=0)

## FIG 10

—— PoC, PL,p=10E-3

---- PoC , PL,p=10E-4

—— PoC (VoIP), PL,p=10E-4

—— VoIP, PL,p=10E-3

---- VoIP, PL,p=10E-4

<table>
<tr><td>European Patent Office</td><td>EUROPEAN SEARCH REPORT</td><td>Application Number<br>EP 04 01 8138</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 347 603 A (NOKIA CORP)<br>24 September 2003 (2003-09-24)<br>* column 1, line 6 - column 2, line 2 *<br>* column 7, line 40 - column 9, line 18 *<br>* claims 1-8 *<br>* figures 1-7 * | 1-11 | H04L12/56 |
| Y | US 6 442 138 B1 (YIN NANYING ET AL)<br>27 August 2002 (2002-08-27)<br>* column 2, line 3 - line 39 *<br>* column 3, line 26 - line 41 *<br>* column 4, line 35 - column 6, line 44 *<br>* column 8, line 21 - column 9, line 50 *<br>* claims 1-13 *<br>* figures 2-5 * | 1-11 | |
| Y | SOLANA A H ET AL: "Capacity analysis and performance evaluation of call admission control for multimedia packet transmission in UMTS WCDMA system"<br>2003 IEEE WIRELESS COMMUNICATIONS AND NETWORKING CONFERENCE RECORD,<br>vol. 3, 16 March 2003 (2003-03-16), pages 1550-1555, XP010640000<br>* the whole document * | 1-11 | TECHNICAL FIELDS SEARCHED (Int.Cl.7)<br><br>H04L<br>H04Q |
| A | WO 00/49824 A (NOKIA NETWORKS OY ; NAGHIAN SIAMAEK (FI)) 24 August 2000 (2000-08-24)<br>* page 2, line 6 - line 16 *<br>* page 3, line 21 - line 29 *<br>* page 6, line 6 - line 26 *<br>* claim 1 *<br>* figure 1 * | 1-11 | |

The present search report has been drawn up for all claims

| Place of search | Date of completion of the search | Examiner |
|---|---|---|
| Munich | 29 November 2004 | Lastoria, G |

EPO FORM 1503 03.82 (P04C01)

**ANNEX TO THE EUROPEAN SEARCH REPORT
ON EUROPEAN PATENT APPLICATION NO.**

EP 04 01 8138

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2004

| Patent document cited in search report | | Publication date | Patent family member(s) | | Publication date |
|---|---|---|---|---|---|
| EP 1347603 | A | 24-09-2003 | US<br>EP | 2003179704 A1<br>1347603 A1 | 25-09-2003<br>24-09-2003 |
| US 6442138 | B1 | 27-08-2002 | US | 5982748 A | 09-11-1999 |
| WO 0049824 | A | 24-08-2000 | FI<br>AU<br>BR<br>CN<br>EP<br>WO<br>JP | 990312 A<br>2674800 A<br>0008264 A<br>1122432 B<br>1153518 A1<br>0049824 A1<br>2002542639 T | 17-08-2000<br>04-09-2000<br>06-11-2001<br>24-09-2003<br>14-11-2001<br>24-08-2000<br>10-12-2002 |

EPO FORM P0459

For more details about this annex : see Official Journal of the European Patent Office, No. 12/82